# EUROPEAN PATENT SPECIFICATION

(11) **EP 3 046 792 B1**
(45) Date of publication and mention of the grant of the patent: **03.07.2019**
(21) Application number: 14845553.8
(22) Date of filing: 18.07.2014
(51) Int. Cl.: B60K 6/20, H02K 9/06, H02K 7/00

(54) **AN ELECTRIC OR HYBRID VEHICLE USING MOTOR-GENERATOR HAVING SHAFT WITH CENTRIFUGAL FAN BLADES FOR COOLING**
ELEKTRO- ODER HYBRIDFAHRZEUG MIT EINEM MOTORGENERATOR MIT EINER WELLE MIT ZENTRIFUGALGEBLÄSESCHAUFELN ZUR KÜHLUNG
VÉHICULE ÉLECTRIQUE OU HYBRIDE UTILISANT UN MOTEUR/GÉNÉRATEUR AYANT UN ARBRE AYANT DES PALES DE VENTILATEUR CENTRIFUGE POUR LE REFROIDISSEMENT

(30) Priority: 17.09.2013 IN 4139CH2013
(43) Date of publication of application: 27.07.2016
(73) Proprietor: Altigreen Propulsion Labs Private Limited, Bangalore 560078 (IN)
(72) Inventor: BANGURA, John, Rockton, Illinois 61072 (US); MOKLEGAARD, Lasse, Waverly, Iowa 50677 (US); SARAN, Amitabh, New Delhi 110016 (IN)
(74) Representative: DREISS Patentanwälte PartG mbB
(86) International application number: PCT/IB2014/063205
(87) International publication number: WO 2015/040510

(56) References cited:
- EP-A1- 1 522 749
- EP-A2- 1 333 561
- WO-A1-2007/107133
- US-A- 2 465 262
- US-A1- 2006 030 450
- US-A1- 2007 065 317
- US-A1- 2007 065 317
- US-B1- 6 809 429
- US-B2- 8 251 164

## Description

### FIELD OF THE INVENTION

This present disclosure pertains to a shaft construction for motor-generators and alternators, specified in a prior art Application No: 4138/CHE/2013 Dated September 16, 2013 by the same applicant/inventors, used specifically for electric, hybrid and conventional vehicles, that provides effective airflow and improvement in the overall thermal cooling without the need for an external fan.

### BACKGROUND OF THE INVENTION

In applications with stringent space and thermal constraints, such as in conventional combustion engine, electric and hybrid vehicles, it is highly desirable to provide high power density motor-generators that are compact and capable of operating within underhood engine ambient temperature ranges. This requires that space utilization must be maximized in order for the motor-generator to provide maximum possible torque and power outputs under all vehicle driving conditions as well as underhood temperatures. Belt-driven air-cooled motor-generators utilized in conventional combustion engine, electric and hybrid vehicles today are generally equipped with axial flow fans to provide force air-cooling so that these electric machines can operate at high power and high underhood engine ambient temperatures. The axial flow fans are typically disposed axially and mounted on one end of the rotor shaft outside of the housing enclosures. The arrangement of an axial flow fan on the shaft of a motor-generator utilized in conventional combustion engine, electric and hybrid vehicles allows air at lower underhood ambient temperatures to be pulled axially from one end of the housing enclosure through the entry vents so that it flows over the motor-generator stator stack and windings and exhausts through the exit vents on the other side of the housing enclosure.

While having an axial flow fan mounted on one end of the rotor shaft to provide airflow and cooling in order to enable an electric motor-generator mounted on an electric, hybrid or conventional combustion engine powertrain to be operated at high power levels and high underhood ambient temperatures, it is however using valuable space that can be effectively utilized to increase the output torque and power capabilities of the electric motor-generator. Furthermore, depending on the hybrid or conventional combustion engine vehicle driving torque and power demands, underhood engine ambient temperatures and resulting thermal cooling requirements, the axial length needed for the axial flow fan could be quite substantial, thus reducing the axial length available for the electric motor-generator and significantly limiting its output torque and power capabilities. For hybrid or conventional combustion engine vehicles with belt-driven fan air-cooled electric motor-generators, this means that the torque and power assist capabilities of the electric motor-generator can be markedly reduced, which in turn results in reduced fuel efficiency.

Prior art on cooling of electric machines, such as disclosed in the example prior arts US 2012/0299403A1, US 2013/0028751A1, US 4,904,891, EP 0244134B2, EP 0462647A1, and EP 0971131A2, have primarily described solutions that require using coolant fluid and internal or external fans for thermal cooling. These prior arts do not describe solutions that provide effective airflow and improved thermal cooling for electric machines, and particularly, electric machines operating in high underhood engine ambient temperatures subject to stringent space constraints. The solution disclosed in the present invention uniquely differs from solutions on thermal cooling of electric machines in the prior arts in terms of the technique, constructional features of the shaft and layout of the electric machine that provide effective airflow and improved overall thermal cooling without using a fan, as well as improve the output torque and power capabilities of the electric machine.

EP 1522749 A1 relates to a magnetic bearing spindle capable of reducing a variation rate of a tube resistance when cooling air passes through and capable of efficiently cooling a heat source such as a rotation shaft and an axial magnetic bearing stator. It does not disclose effective airflow and improved overall cooling without an external fan in a shaft for motor-generators utilized in hybrid vehicles. Rather, it uses helical fins to enhance cooling air intake efficiency to the air passage.

Accordingly, the present invention describes a rotor shaft construction that provides effective airflow and improved cooling of a motor-generator, particularly belt-driven air-cooled motor-generator typically used in hybrid and convention combustion vehicles with stringent space constraints, without an external fan that utilizes axial space that can be effectively used to significantly increase the output torque and power capabilities of the motor-generator. The structure of the rotor shaft provides essential advantages over the current state-of-the-art in belt-driven air-cooled motor-generators utilized in conventional combustion engine, electric and hybrid vehicles that are cooled using axial flow fans. These advantages include: (1) providing effective airflow along both the hottest regions of the stator winding end-turns, through the inside of the rotor and axially along the shaft, through the bearing mounting surfaces on both ends of the housing, and thereby providing improved cooling of the entire motor-generator utilized in conventional combustion engine, electric and hybrid vehicles; and (2) enabling improved thermal performance margins which, in turn allow the motor-generator utilized in conventional combustion engine, electric and hybrid vehicles to deliver relatively high output torque and power. In comparison, the axial flow fan provides airflow from one end of the motor-generator housing, over the stator windings and exhausts through the exit vents on the other end of the housing with margin airflow, if any, that reaches the rotor, shaft, and bearings mounted on both ends of the shaft.

Furthermore, it has been recognized by the authors of the present invention that the shaft construction when integrated into a belt-driven fan air-cooled motor-generator for hybrid vehicles can yield improvement in fuel efficiency due to the improvement in output torque and power assist capabilities of the motor-generator that is directly related to the improved airflow and thermal cooling characteristics of the shaft construction.

### BRIEF DESCRIPTION OF THE INVENTION

Disclosed in the present invention is a shaft construction for motor-generator operating subject to high underhood engine ambient temperatures and stringent space requirements, particularly in electric, hybrid and internal combustion engine vehicles, that provides effective airflow and improvement in the thermal cooling of the overall motor-generator without the need for an external fan. The rotor shaft comprises of a plurality of circumferentially arranged forward radial tip centrifugal fan blades and longitudinal cooling channels. The longitudinal cooling channels are disposed adjacent to the centrifugal fan blades for communicating the airflow through to the other regions of the shaft, rotor and stator winding end-turns and bearing mounting surfaces.

The centrifugal fan blades include radial tips that are oriented in the forward direction of rotation of the shaft rotation. As the rotor rotates in the forward direction during operation of the motor generator, air from the outside is pulled radially inward by the circumferentially arranged centrifugal fan blades through the entry vents on the housing and across the motor-generator winding end-turns on one end. This air is propelled at high pressure by the circumferentially arranged centrifugal fan blades through the circumferentially arranged longitudinal cooling channels on the shaft in the axial direction and over the inner axial surfaces formed by the circumferences of the inner diameters of the rotors, through the motor-generator winding end-turns on the other end and providing additional cooling of the stator windings, and it exhausts through the exit vents on both ends of the housing.

The shaft of the present invention may be constructed as a single integral body with a plurality of circumferentially disposed radial tip centrifugal fan blades and longitudinal cooling channels. The centrifugal fan blades are axially disposed in proximity to the radial path of the airflow from the entry vents on the circumference of the housing in order to enable airflow from the outside to be pulled directly into the cavity formed by the stator winding end-turns on one end of the stators. Once the air is pulled into the cavity formed by the motor-generator utilized in conventional combustion engine, electric and hybrid vehicles winding end-turns on one end of the stators, the rotational motion of the centrifugal fan blades of the shaft churns the air and creates a high pressure in the axial direction that propels the air to flow axially through the longitudinal cooling channels, over the inner axial surfaces formed by the circumferences of the inner diameters of the rotors, across the motor-generator winding end-turns on the other end of the stators as well as bearing mounting surfaces on both end of the housing, and finally exhausts on the low pressure sides through the exits vents on both ends of the housing.

Moreover, the shaft disclosed in the present invention provides the additional advantage of enabling airflow to the bearing mounting surfaces on both ends of the housing, thus providing cooling to the bearings, reducing bearing temperatures and improving the life of the bearings.

Disclosed in the present invention is a shaft that provides effective airflow path and improved cooling of the stator windings, rotor, shaft and bearings, and thus improved cooling of the overall motor-generator utilized in conventional combustion engine, electric and hybrid vehicles. This approach prevents high temperature gradients in the rotor and shaft that can results in improvement in the performance of the motor-generator.

Also, disclosed is a motor-generator having the shaft of the embodiment of the present invention mounted thereon that takes advantage of the effective airflow and improved thermal cooling characteristics of the shaft construction to achieve improvement in output torque and power capabilities.

Also, further disclosed is a hybrid vehicle in which a motor-generator having the shaft of the embodiment of the present invention mounted thereon that benefits from improved torque and power assist capabilities of the motor-generator due to the effective airflow and improved thermal cooling characteristics of the shaft construction to achieve improvement in fuel efficiency.

### BRIEF DESCRIPTION OF THE DRAWINGS

The following descriptions should not be considered limiting in any way. With reference to the accompanying drawings, like elements are numbered alike.
FIG. 1 is an isometric view of the shaft according to a preferred embodiment of the present invention;
FIG. 2 is an isometric cutout view of a rotor assembly having the shaft according to the preferred embodiment of the present invention;
FIG. 3 is a cross-sectional view of a motor-generator utilized in conventional combustion engine, electric and hybrid vehicles that includes a rotor assembly having the shaft according to the preferred embodiment of the present invention; and

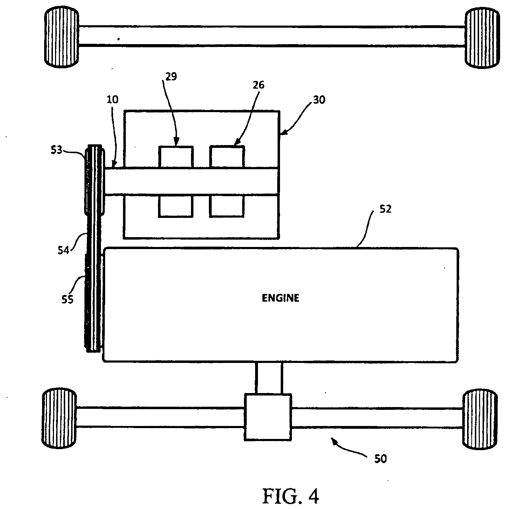

FIG. 4 is an illustration of a hybrid vehicle that includes the motor-generator having the shaft according to the preferred embodiment of the present invention.

### DETAILED DESCRIPTION OF THE INVENTION

The preferred embodiment of the present invention will be described in detail with reference to the accompanying drawings. It should be understood that although a motor-generator utilized in conventional combustion engine, electric and hybrid vehicles has been used to describe one preferable application, the shaft illustrated in the preferred embodiment of the present invention could be used in other applications.

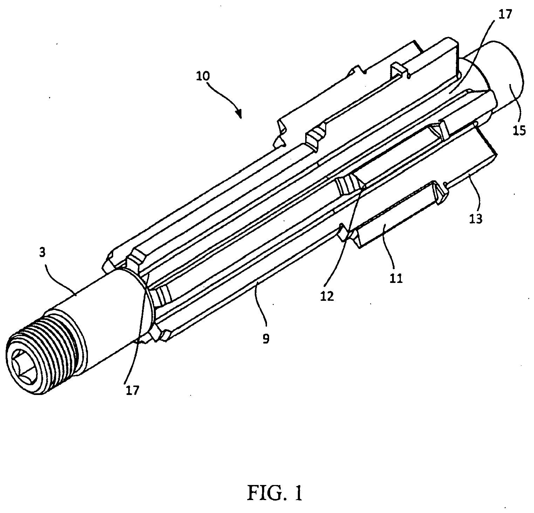

FIG. 1 illustrates an isometric view of a shaft, which is referred to herein as assembly 10, according to the preferred embodiment of the present invention. The shaft 10 comprises of a plurality of circumferentially arranged centrifugal fan blades 11 with forward-curved surfaces and radial tips 12, and a plurality of circumferentially arranged longitudinal cooling channels 17 along the entire length of the shaft. The surfaces of the centrifugal fan blades 11 are oriented in the forward direction of rotation for proper functioning when the shaft 10 is rotating in the forward direction. The longitudinal cooling channels 17 are for communicating the airflow in the cavity formed by the motor-generator stator winding end-turns to the other regions of the shaft, rotor, stator winding end-turns and bearing mounting surfaces.

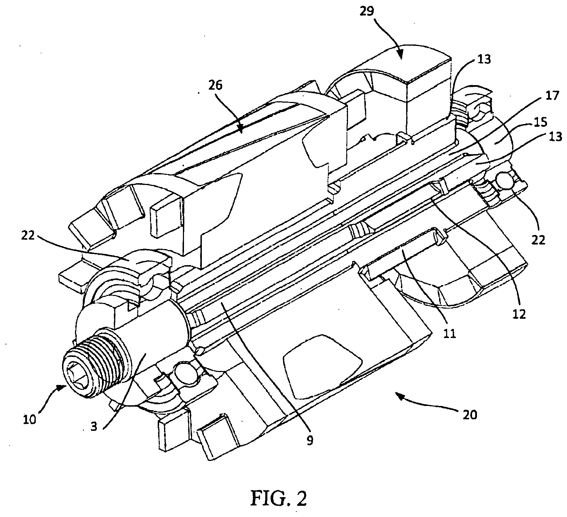

Referring to FIG. 2 that shows an isometric cutout view of a rotor assembly section having a first rotor assembly 26 and a second rotor assembly 29 both mounted on the shaft. The first rotor assembly 26 and second rotor assembly 29 are mounted on the shaft 10 adjacent to the centrifugal fan blades 11. The embodiment of the present invention shows longitudinal channels 17 of uniform width; however, the longitudinal cooling channels 17 may be constructed such that the widths on both sides adjacent to the centrifugal fan blades 11 are different in order to provide different pressures and airflow to the other regions of a motor-generator utilized in conventional combustion engine, electric and hybrid vehicles. On both end of the shaft 10 are mounted bearings 22 that are cooled by the airflow that exhausts from the longitudinal cooling channels 17.

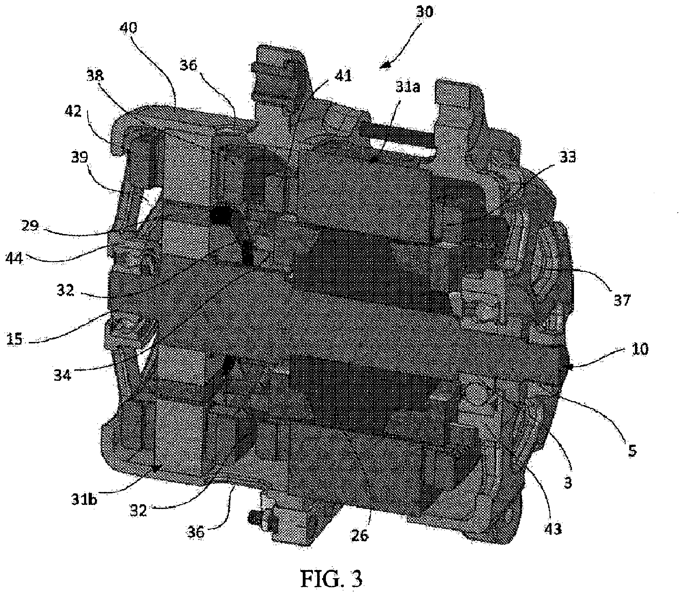

Now, referring to FIG. 3 that shows an isometric cutout view of a motor-generator utilized in conventional combustion engine, electric and hybrid vehicles 30 comprising the shaft 10, rotor assemblies 26 and 29 and stator assemblies 31a and 31b, wherein the rotor assemblies include bearings 22 mounted onto the shaft 10 on both ends. The axially extending end-turns 38 and 41 of the stator windings are disposed in proximity to the circumferentially disposed entry vents 36 on the outer diameter of the housing 40 and are separated by a small gap in order for air to be pulled into the cavity formed by the axially extending end-turns 38 and 41. The axially extending end-turns 33 and 42 of the stator windings on the other end are disposed in proximity to the exhaust vents 37 and 39 located radially outward from the shaft 10 on both ends of the housing 40.

During operation of the motor-generator utilized in conventional combustion engine, electric and hybrid vehicles 30, the shaft 10 rotates and air from the outside of the housing 40 is pulled radially inwardly by the centrifugal fan blades 11 through the entry vents 36 on the housing and across the gap between the axially extending end-turns 38 and 41 into the cavity formed by said end-turns. Once the air is pulled into the cavity formed by the motor-generator winding end-turns 38 and 41 on one end of the stator 31a and 31b, the rotational motion of the centrifugal fan blades 11 on the shaft 10 churns the air and creates a high pressure in the axial direction that propels the air to flow axially in opposite directions through the circumferentially disposed longitudinal cooling channels 17 on the shaft 10, along the rotor inner surfaces in the axial direction formed by the circumferences of the inner diameters of the rotor assembly 26 and rotor assembly 29, through the axially extending winding end-turns 33 and 42 on the other side of the stators 31a and 31b and providing additional cooling along the way, over the bearing mount surfaces on both ends of the housing, and exhausts on the low pressure side through the exhaust vents 37 and 39 located radially outward from the shaft 10 on both ends of the housing.

The effective airflow pattern is realized due to the constructional features of the shaft in combination with the stator windings end-turn layouts, rotor, shaft and housing designs of the motor-generator 30. The solution disclosed in the present invention provides cooling to the stator windings, rotor, shaft and bearings, thereby providing substantial cooling of the overall motor-generator and improving its performance.

The present invention is also directed to a motor-generator utilized in conventional combustion engine, electric and hybrid vehicles 30 that comprises the shaft 10. The shaft 10 construction provides a means to deliver effective and improve cooling to the motor-generator utilized in conventional combustion engine, electric and hybrid vehicles 30 such that improved performance can be achieved. During operation of the motor-generator utilized in conventional combustion engine, electric and hybrid vehicles 20, the shaft 10 rotates and air is pulled from the outside of the housing 40 inwardly into the cavity formed by the axially extending stator winding end-turns 38 and 41. The air is then churned by the circumferentially arranged centrifugal fan blades 11 to create a high pressure that propels the air axially in opposite directions along the circumferentially arranged longitudinal cooling channels 17 on the shaft 10. The air then flows in the axial directions along the rotor inner surfaces formed by the circumferences of the inner diameters of the rotor assembly 26 and rotor assembly 29, through the axially extending winding end-turns 33 and 42 on the other side of the stators 31a and 31b and providing additional cooling along the way, over the bearing mounting surfaces 43 and 44 in the housing on both ends, and exhausts on the low pressure side through the exhaust vents 37 and 39 located radially outward from the shaft on both ends of the housing.

Furthermore, the combination of the shaft 10 construction and the layout of the motor-generator utilized in conventional combustion engine, electric and hybrid vehicles 30 is essential in that it enables the airflow to reach the bearing mounting surfaces 43 and 44 in the housing, and thereby providing cooling that improves the life of the bearings and hence overall life of the motor-generator 30. Also, this combination enables the major assemblies of the motor-generator 30 that includes stators 31a and 31b, rotors 26 and 29, shaft 10 and bearing mounting surfaces 43 and 44 in the housing 40 on both ends to receive airflow and thermal cooling that prevents high temperature gradients, thus resulting in improved motor-generator utilized in conventional combustion engine, electric and hybrid vehicles performance.

Also disclosed in the present invention is a hybrid vehicle 50 in which the motor-generator 30 is mounted thereon. The motor-generator utilized in conventional combustion engine, electric and hybrid vehicles 30 includes the shaft 10 that is mechanical coupled to the engine 52 of the hybrid vehicle 50 via a serpentine belt that links the crankshaft pulley 55 and motor-generator shaft pulley 53. The hybrid vehicle 50 performance in terms of fuel efficiency is improved due to the improved torque and power assist capabilities of the motor-generator 30, which is a direct benefit of the improved airflow and thermal cooling characteristics of the shaft construction as disclosed in the present invention.

While the invention has been described with reference to specific embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Accordingly, it is intended that the invention not be limited to the particular embodiment disclosed herein as the best mode contemplated for carrying out this invention, but that the invention will include all embodiments falling within the scope of the claims.

## Claims

1. A shaft (10) for use in a motor-generator (30), wherein the shaft (10) is constructed as a single integral body and comprising:
a plurality of circumferentially disposed longitudinal channels (17) having circumferential mounting surfaces (9, 13) for adjacently mounting dual rotors (26, 29) wherein,
the shaft (10) is formed with a plurality of centrifugal fan blades (11) which are oriented in the forward direction of rotation and which are disposed between said dual rotors (26, 29) such that the axial length of said blades (11) is confined to the axial space between said dual rotors (26, 29),
the plurality of circumferentially disposed longitudinal airflow channels (17) and the inner circumferential surfaces of said dual rotors (26, 29) together form a plurality of radially bounded circumferentially disposed longitudinal airflow channels (17) adjacent to said blades (11) and confined to the lengths of said dual rotors (26, 29) when mounted onto the shaft (10).

2. The shaft (10) as set forth in claim 1, wherein the circumferentially disposed longitudinal airflow channels (17) are of uniform widths along the length of the shaft (10).

3. The shaft (10) as set forth in claim 1, wherein said blades (11) having forward radial tips (12) that are oriented in the forward direction of rotation of the shaft (10) with the leading sides having forward curved surfaces and the trailing side having straight surfaces.

4. The shaft (10) as set forth in claim 1, wherein said blades (11) push air axially in both directions along the circumferentially disposed airflow channels (17) on both sides of said blades (11) in response to rotation of the shaft (10).

5. A motor-generator rotor assembly comprising:
dual rotors (26, 29); and
a shaft (10) as defined in claim 1;
wherein the dual rotors (26, 29) are mounted on the circumferential mounting surfaces of the shaft (10) on both sides of said blades (11), so that they together form a rotor assembly.

6. The motor-generator rotor assembly as set forth in claim 5, wherein the circumferentially disposed longitudinal airflow guide channels (17) are of uniform widths along the length of the shaft (10).

7. The motor-generator rotor assembly as set forth in claim 5, wherein said blades (11) having forward radial tips (12) that are oriented in the forward direction of rotation of the shaft (10) with the leading sides having forward curved surfaces and the trailing side having straight surfaces.

8. The motor-generator rotor assembly as set forth in claim 5, wherein said blades (11) push air axially in both directions along the circumferentially disposed airflow channels (17) on both sides of said blades (11) in response to rotation of the shaft (10).

9. A motor-generator (30) comprising:
dual wound stators (31a, 31b);
a motor-generator rotor assembly as defined in claim 5;
a rigid housing enclosure (40);
wherein,
the dual stators (31a, 31b) together form a stator assembly that includes a cavity formed by axially extending adjacent end-turns (38, 41) and fixed to an interior surface of the housing enclosure (40) with bearings (22) mounted thereon to support said shaft (10) of the rotor assembly and permitting rotation;
the rotor assembly is disposed within the stator assembly with said blades (11) disposed within said cavity of the stator assembly.

10. The motor-generator (30) as set forth in claim 9, wherein the circumferentially disposed longitudinal airflow guide channels (17) are of uniform widths along the length of the shaft.

11. The motor-generator (30) as set forth in claim 9, wherein said blades (11) having forward radial tips (12) that are oriented in the forward direction of rotation of the shaft (10) with the leading sides having forward curved surfaces and the trailing side having straight surfaces.

12. The motor-generator (30) as set forth in claim 9, wherein said blades (11) push air axially in both directions along the circumferentially disposed airflow channels (17) on both sides of said blades (11) in response to rotation of the shaft (10).

13. A hybrid vehicle (50) comprising:
an engine (52); and
a motor-generator (30) as defined in claim 9 that is coupled to the engine (52).

14. The hybrid vehicle (50) as set forth in claim 13, wherein the circumferentially disposed longitudinal airflow cooling channels (17) are of uniform widths along the length of the shaft (10).

15. The hybrid vehicle (50) as set forth in claim 13, wherein said blades (11) having forward radial tips (12) that are oriented in the forward direction of rotation of the shaft (10) with the leading sides having forward curved surfaces and the trailing side having straight surfaces.

16. The hybrid vehicle (50) as set forth in claim 13, wherein said blades (11) push air in both directions along the circumferentially disposed airflow channels (17) on both sides of said blades (11) in response to rotation of the shaft (10).

## Patentansprüche

1. Welle (10) für die Verwendung in einem Motorgenerator (30), wobei die Welle (10) als ein einziger einteiliger Körper ausgebildet ist und umfasst:
mehrere in Umfangsrichtung angeordnete Längskanäle (17) mit Umfangsbefestigungsflächen (9, 13) zum benachbarten Anbringen von Doppelrotoren (26, 29),
wobei die Welle (10) mit mehreren zentrifugalen Gebläseflügeln (11) gebildet ist, die auf die Vorwärtsrichtung der Drehung ausgerichtet sind und die zwischen den Doppelrotoren (26, 29) derart angeordnet sind, dass die axiale Länge der Flügel (11) auf den axialen Raum zwischen den Doppelrotoren (26, 29) begrenzt ist,
wobei die mehreren in Umfangsrichtung angeordneten Längsluftstromkanäle (17) und die inneren Umfangsflächen der Doppelrotoren (26, 29) zusammen mehrere radial begrenzte Längsluftstromkanäle (17) bilden, die in Umfangsrichtung angeordnet sind, an die Flügel (11) angrenzen und auf die Längen der Doppelrotoren (26, 29) begrenzt sind, wenn sie auf der Welle (10) angebracht werden.

2. Welle (10) nach Anspruch 1, wobei die in Umfangsrichtung angeordneten Längsluftstromkanäle (17) entlang der Länge der Welle (10) von einheitlicher Breite sind.

3. Welle (10) nach Anspruch 1, wobei die Flügel (11) vordere radiale Spitzen (12) besitzen, die auf die Vorwärtsrichtung der Drehung der Welle (10) ausgerichtet sind, wobei die Vorderseiten vorwärts gekrümmte Flächen besitzen und die Rückseiten gerade Flächen besitzen.

4. Welle (10) nach Anspruch 1, wobei die Flügel (11) als Reaktion auf die Drehung der Welle (10) Luft axial in beide Richtungen entlang der in Umfangsrichtung angeordneten Luftstromkanäle (17) auf beiden Seiten der Flügel (11) drücken.

5. Motorgeneratorrotoranordnung, die umfasst:
Doppelrotoren (26, 29); und
eine Welle (10) nach Anspruch 1;
wobei die Doppelrotoren (26, 29) auf den Umfangsbefestigungsflächen der Welle (10) auf beiden Seiten der Flügel (11) angebracht sind, so dass sie zusammen eine Rotoranordnung bilden.

6. Motorgeneratorrotoranordnung nach Anspruch 5, wobei die in Umfangsrichtung angeordneten Längsluftstromführungskanäle (17) entlang der Länge der Welle (10) von einheitlicher Breite sind.

7. Motorgeneratorrotoranordnung nach Anspruch 5, wobei die Flügel (11) vordere radiale Spitzen (12) besitzen, die auf die Vorwärtsrichtung der Drehung der Welle (10) ausgerichtet sind, wobei die Vorderseiten vorwärts gekrümmte Flächen besitzen und die Rückseiten gerade Flächen besitzen.

8. Motorgeneratorrotoranordnung nach Anspruch 5, wobei die Flügel (11) als Reaktion auf die Drehung der Welle (10) Luft axial in beide Richtungen entlang der in Umfangrichtung angeordneten Luftstromkanäle (17) auf beiden Seiten der Flügel (11) drücken.

9. Motorgenerator (30), der umfasst:
doppeltgewickelte Statoren (31a, 31b);
eine Motorgeneratorrotoranordnung nach Anspruch 5;
eine Umhüllung eines starren Gehäuses (40);
wobei die Doppelstatoren (31a, 31b) zusammen eine Statoranordnung bilden, die einen Hohlraum enthält, der durch sich axial erstreckende benachbarte Wicklungsköpfe (38, 41) gebildet wird und an einer inneren Fläche der Gehäuseumhüllung (40) mit Lagern (222), die darauf angebracht sind, um die Welle (10) der Rotoranordnung zu tragen und eine Drehung zu erlauben, befestigt ist;
wobei die Rotoranordnung innerhalb der Statoranordnung angeordnet ist, wobei die Flügel (11) innerhalb des Hohlraums der Statoranordnung angeordnet sind.

10. Motorgenerator (30) nach Anspruch 9, wobei die in Umfangsrichtung angeordneten Längsluftstromführungskanäle (17) entlang der Länge der Welle von einheitlicher Breite sind.

11. Motorgenerator (30) nach Anspruch 9, wobei die Flügel (11) vordere radiale Spitzen (12) besitzen, die in die Vorwärtsrichtung der Drehung der Welle (10) angeordnet sind, wobei die Vorderseiten vorwärts gekrümmte Flächen besitzen und die Rückseiten geraden Flächen besitzen.

12. Motorgenerator (30) nach Anspruch 9, wobei die Flügel (11) als Reaktion auf eine Drehung der Welle (10) Luft axial in beide Richtungen entlang der in Umfangsrichtung angeordneten Luftstromkanäle (17) auf beiden Seiten der Flügel (11) drücken.

13. Hybridfahrzeug (50), das umfasst:
eine Maschine (52); und
einen Motorgenerator (30) nach Anspruch 9, der an die Maschine (52) gekoppelt ist.

14. Hybridfahrzeug (50) nach Anspruch 13, wobei die in Umfangsrichtung angeordneten Längsluftstromkühlkanäle (17) entlang der Länge der Welle (10) von einheitlicher Breite sind.

15. Hybridfahrzeug (50) nach Anspruch 13, wobei die Flügel (11) vordere radiale Spitzen (12) besitzen, die auf die Vorwärtsrichtung der Drehung der Welle (10) ausgerichtet sind, wobei die Vorderseiten vorwärts gekrümmte Flächen besitzen und die Rückseiten gerade Flächen besitzen.

16. Hybridfahrzeug (50) nach Anspruch 13, wobei die Flügel (11) als Reaktion auf eine Drehung der Welle (10) Luft in beide Richtungen entlang der in Umfangsrichtung angeordneten Luftstromkanäle (17) auf beiden Seiten der Flügel (11) drücken.

## Revendications

1. Arbre (10) destiné à être utilisé dans un moteur-générateur (30), dans lequel l'arbre (10) est conçu sous la forme d'un corps intégral unique et comprenant:
une pluralité de canaux longitudinaux d'écoulement d'air disposés sur la circonférence (17) ayant des surfaces de montage sur la circonférence (9, 13) pour le montage, de manière adjacente, de rotors doubles (26, 29),
dans lequel l'arbre (10) est constitué d'une pluralité de pales de ventilateur centrifuge (11) qui sont orientées dans la direction vers l'avant de la rotation, et qui sont disposées entre lesdits rotors doubles (26, 29), de telle façon que la longueur axiale desdites pales (11) est confinée à l'espace axial entre lesdits rotors doubles (26, 29),
la pluralité des canaux longitudinaux d'écoulement d'air disposés sur la circonférence (17) et les surfaces internes de circonférence desdits rotors doubles (26, 29) forment ensemble une pluralité de canaux longitudinaux d'écoulement d'air disposés sur la circonférence et délimités radialement (17) adjacents auxdites pales (11) et confinés à la longueur desdits rotors doubles (26, 29) lorsqu'il sont montés sur l'arbre (10).

2. Arbre (10) tel que défini dans la revendication 1, dans lequel les canaux longitudinaux d'écoulement d'air disposés sur la circonférence (17) ont une largeur uniforme sur la longueur de l'arbre (10).

3. Arbre (10) tel que défini dans la revendication 1, dans lequel lesdites pales (11) ayant des embouts radiaux avant (12) qui sont orientés dans la direction vers l'avant de la rotation de l'arbre (10), les côtés d'attaque ayant des surfaces incurvées vers l'avant et le côté arrière ayant des surfaces droites.

4. Arbre (10) tel que défini dans la revendication 1, dans lequel lesdites pales (11) poussent l'air axialement dans deux directions le long des canaux d'écoulement d'air disposés sur la circonférence (17) sur les deux côtés desdites pales (11) en réponse à la rotation de l'arbre (10).

5. Ensemble rotor de moteur-générateur comprenant:
des rotors doubles (26, 29); et
un arbre (10) tel que défini dans la revendication 1 ;
dans lequel les rotors doubles (26, 29) sont montés sur les surfaces de montage de circonférence de l'arbre (10) sur les deux côtés desdites pales (11) de telle sorte qu'ils forment ensemble un ensemble rotor.

6. Ensemble rotor de moteur-générateur tel que défini dans la revendication 5, dans lequel les canaux longitudinaux de guidage d'écoulement d'air disposés sur la circonférence (17) ont une largeur uniforme sur la longueur de l'arbre (10).

7. Ensemble rotor de moteur-générateur tel que défini dans la revendication 5, dans lequel lesdites pales (11) ayant des embouts radiaux avant (12) qui sont orientés dans la direction vers l'avant de la rotation de l'arbre (10), les côtés d'attaque ayant des surfaces incurvées vers l'avant et le côté arrière ayant des surfaces droites.

8. Ensemble rotor de moteur-générateur tel que défini dans la revendication 5, dans lequel lesdites pales (11) poussent l'air axialement dans deux directions le long des canaux d'écoulement d'air disposés sur la circonférence (17) sur les deux côtés desdites pales (11) en réponse à la rotation de l'arbre (10).

9. Moteur-générateur (30) comprenant:
des stators bobinés doubles (31a, 31b) ;
un ensemble rotor de moteur-générateur tel que défini dans la revendication 5;
une enceinte de boitier (40) rigide;
dans lequel les stators doubles (31a, 31b) forment ensemble un ensemble stator qui comporte une cavité formée en étendant axialement des spires d'extrémité (38, 41) adjacentes et fixées à une surface interne de l'enceinte de boitier (40) avec des paliers (22) montés sur celle-ci pour supporter ledit arbre (10) de l'ensemble rotor et autorisant la rotation;
l'ensemble rotor est disposé à l'intérieur de l'ensemble stator, lesdites pales (11) étant disposées à l'intérieur de ladite cavité de l'ensemble stator.

10. Moteur-générateur (30) tel que défini dans la revendication 9, dans lequel les canaux longitudinaux de guidage d'écoulement d'air disposés sur la circonférence (17) ont une largeur uniforme sur la longueur de l'arbre.

11. Moteur-générateur (30) tel que défini dans la revendication 9, dans lequel lesdites pales (11) ayant des embouts radiaux avant (12) qui sont orientés dans la direction vers l'avant de la rotation de l'arbre (10), les côtés d'attaque ayant des surfaces incurvées vers l'avant et le côté arrière ayant des surfaces droites.

12. Moteur-générateur (30) tel que défini dans la revendication 9, dans lequel lesdites pales (11) poussent l'air axialement dans deux directions le long des canaux d'écoulement d'air disposés sur la circonférence (17) sur les deux côtés desdites pales (11) en réponse à la rotation de l'arbre (10).

13. Véhicule hybride (50) comprenant:
un moteur (52); et
un moteur-générateur (30) tel que défini dans la revendication 9, qui est couplé au moteur (52).

14. Véhicule hybride (50) tel que défini dans la revendication 13, dans lequel les canaux longitudinaux d'écoulement d'air disposés sur la circonférence (17) ont une largeur uniforme sur la longueur de l'arbre (10).

15. Véhicule hybride (50) tel que défini dans la revendication 13, dans lequel lesdites pales (11) ayant des embouts radiaux avant (12) qui sont orientés dans la direction vers l'avant de la rotation de l'arbre (10), les côtés d'attaque ayant des surfaces incurvées vers l'avant et le côté arrière ayant des surfaces droites.

16. Véhicule hybride (50) tel que défini dans la revendication 13, dans lequel lesdites pales (11) poussent l'air dans deux directions le long des canaux d'écoulement d'air disposés sur la circonférence (17) sur les deux côtés desdites pales (11) en réponse à la rotation de l'arbre (10).
